# FASCICULE DE BREVET EUROPEEN

(11) **EP 0 623 989 B1**
(45) Date de publication et mention de la délivrance du brevet: **05.03.1997**
(21) Numéro de dépôt: 94810204.1
(22) Date de dépôt: 12.04.1994
(51) Int. Cl.: H02K 7/06, F16K 31/04

(54) **Actionneur linéaire**
Linearantrieb
Linear actuator

(30) Priorité: 03.05.1993 CH 1351/93
(43) Date de publication de la demande: 09.11.1994
(73) Titulaire: SAIA-Burgess Electronics AG, CH-3280 Murten (CH)
(72) Inventeur: Sieber, Edmond, CH-1582 Donatyre (CH); Rudaz, Claude, CH-1763 Granges-Paccot (CH)
(74) Mandataire: AMMANN INGENIEURS-CONSEILS EN PROPRIETE INTELLECTUELLE SA BERNE

(56) Documents cités:
- EP-A- 0 333 539
- EP-A- 0 512 139
- FR-A- 2 394 682
- GB-A- 1 005 520
- GB-A- 1 027 600
- GB-A- 2 097 197
- US-A- 2 445 658

## Description

La présente invention concerne un actionneur linéaire selon le préambule de la revendication 1.

Contrairement à l'actionneur divulgué dans FR-A-2,394,682, où l'électro-aimant sert uniquement à maintenir l'élément commandé en position de travail, celui répondant aux caractéristiques du préambule permet la possibilité de règler cet élément entre sa position de travail et sa position de repos.

EP-0,512,139 décrit un actionneur proposant une solution de réglage de l'élément commandé, en l'occurrence une soupape prolongée d'une tige filetée (vis). Selon cette antériorité, l'écrou coopérant avec la vis est relié, d'une part, à un moteur électrique par l'intermédiaire d'un élément d'entraînement et, d'autre part, à un palier par l'intermédiaire de roulements. En cas de rupture de l'alimentation, la soupape est mise en position de sécurité, l'écrou et le palier étant maintenus dans une position de départ par l'action d'un organe élastique agissant en parmanence sur eux et l'action d'un électro-aimant agissant contre celle dudit organe élastique. La construction de cet actionneur est relativement complexe, donc couteuse, sans que la fiabilité soit accrue, au contraire.

La présente invention, tout en poursuivant un but similaire de celui décrit dans cette antériorité, en ce qui concerne la possibilité de réglage de l'élément commandé, pallie l'inconvénient constaté par la mise en oeuvre d'un nouveau dispositif de déplacement axial du rotor du moteur, sensiblement plus rationnel que celui connu dans l'art antérieur.

Cet inconvénient est corrigé grâce aux moyens définis dans la partie caractérisante de la revendication 1.

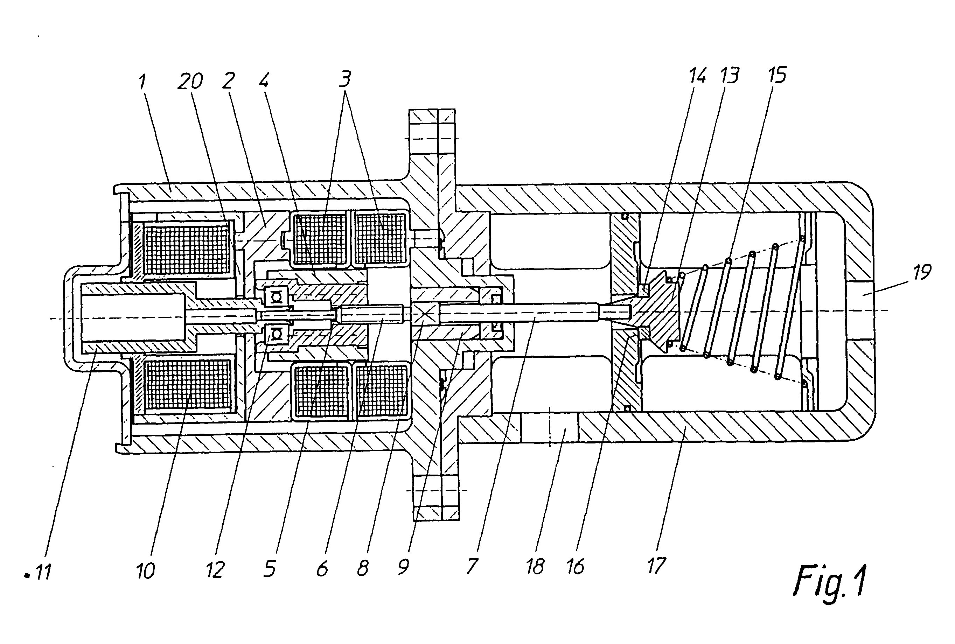

L'invention sera expliquée en détail à l'aide d'un exemple d'exécution non limitatif dont une coupe axiale est représentée dans le dessin.

Le boîtier 1 sous forme de douille enferme un support 2 qui supporte le stator 3 d'un moteur pas à pas ou moteur synchrone réversible. Une alimentation convenable des deux parties du stator 3 permet d'entraîner le rotor 4 à aimentation permanente dans l'une ou dans l'autre direction, éventuellement avec des vitesses variables. Le rotor comporte une partie 5 avec filetage intérieur qui constitue un système vis-écrou, avec une partie filetée 6 de la tige d'actionnement 7 déplaçable axialement mais liée en rotation au moyen d'une partie de section carrée guidée axialement dans une douille 9. Le support 2 supporte également l'enroulement 10 d'un électro-aimant. L'enroulement 10 agit sur un plongeur 11 relié au rotor 4 à l'aide d'un roulement à billes 12, le plongeur 11 et le rotor 4 étant ainsi accouplés axialement, mais le rotor étant libre de tourner par rapport au plongeur.

Dans l'exemple représenté, la tige 7 de l'actionneur agit sur une tête de soupape 13 qui porte une garniture de soupape 14. Dans la position dessinée, un ressort 15 presse la garniture 14 contre un siège de soupape 16 monté dans le boîtier 17 de soupape. Le fluide dont le débit est à régler par la soupape peut circuler entre une entrée 18 et une sortie 19.

Dans la position dessinée qui correspond à une position de repos, la soupape est fermée par la force du ressort 15 et la tige 7, le rotor 4 et le plongeur 11 sont déplacés dans une position de repos ou de sécurité pour laquelle le rotor 4 se trouve en partie en dehors du stator 3 du moteur, et le plongeur 11 se trouve éloigné d'une pièce polaire 20 de l'électro-aimant. On part de l'hypothèse que dans la position de repos représentée, le moteur et l'aimant ne sont pas alimentés. Du fait que la consommation d'énergie de l'actionneur est très faible, une alimentation de l'aimant reste sans influence sur la position dessinée, étant donné que la force agissant sur le plongeur est insuffisante pour vaincre la force du ressort 15. Puis on admet que le moteur est alimenté pour tourner le rotor dans le sens d'une fermeture de la soupape. Cependant, étant donné que la soupape est déjà fermée et que la tête de soupape ne peut plus être déplacée plus loin vers la gauche sur le dessin, le rotor 4 et le plongeur 11 y accouplé son déplacés vers la droite. Ce déplacement peut être effectué à une vitesse relativement élevée, selon le circuit de commande adopté permettant de régler la vitesse du moteur. Malgré la position déplacée du rotor 4 le couple développé par le moteur est suffisant pour faire tourner le rotor et le déplacer avec le plongeur 11. Ce déplacement se poursuit jusqu'à ce que, vers la fin de course, le plongeur 11 s'approche suffisamment de la pièce polaire 20 pour être subitement attiré vers celle-ci. Le rotor du moteur et le plongeur 11 sont ainsi ramenés dans leur position de travail à partir de laquelle la position de la soupape peut être réglée par rotation appropriée du rotor 4 et de son écrou 5. Lors d'une rupture de l'alimentation, l'électro-aimant est désaimanté et le plongeur 11 avec tous les éléments y accouplés sont déplacés axialement par le ressort 15 pour fermer immédiatement et complètement la soupape. Lorsque l'alimentation est rétablie, l'éléctro-aimant est d'abord remis en position de travail à l'aide du moteur, lequel peut ensuite effectuer le réglage de la soupape comme indiqué ci-devant.

Les détails de construction de l'actionneur et l'application de l'actionneur ne sont pas limités à l'exemple décrit ci-devant. L'actionneur peut agir sur d'autres éléments. Le ressort de rappel peut être intégré dans l'actionneur comme tel pour que l'actionneur puisse agir sur n'importe quel organe à déplacer. Au lieu d'un ressort de rappel on pourrait utiliser la gravité pour remettre les organes en position de repos lors d'une panne d'alimentation. Au lieu d'un rotor déplaçable axialement un rotor non déplaçable peut entraîner un écrou ou douille taraudée qui est déplaçable axialement avec l'électro-aimant.

## Revendications

1. Actionneur linéaire comprenant un moteur électrique (3,4) dont le rotor (4) agit sur un système vis-écrou (5,6) pour déplacer l'élément actionné (7), des moyens de rappel (15) pour remettre l'élément actionné dans une position de repos ou de sécurité et un électro-aimant (10,11), l'électro-aimant (10) agissant sur un élément mobile (11), pour maintenir l'élément actionné (7) en position de travail, le systeme vis-ecrou (5,6) étant accouplé au mobile (11) de l'électro-aimant (10,11), et susceptible d'être déplacé axialement avec ledit mobile de l'électro-aimant,
caractérisé en ce que le rotor (4) du moteur (3,4) est déplaçable axialement, ledit écrou étant constitué par ledit rotor.

2. Actionneur selon la revendication 1, caractérisé en ce que le rotor (4) dans sa position de travail se trouve au moins approximativement dans une position symétrique par rapport au stator (3) du moteur pour permettre un fontionnement dans les deux sens de rotation.

3. Actionneur selon l'une des revendications 1 à 2, comprenant un circuit de commande susceptible d'alimenter automatiquement le moteur (3,4) lors du rétablissement du courant dans le sens déplaçant le mobile (11) de l'aimant (10,11) vers leur position de travail au moyen du système vis-écrou (5,6).

4. Actionneur selon la revendication 1, caractérisé en ce qu'un écrou est déplaçable axialement par rapport au rotor mais entrainé par celui-ci.

## Patentansprüche

1. Linearantrieb, mit einem Elektromotor (3, 4), dessen Rotor (4) zum Verschieben des angetriebenen Organs (7) auf eine Anordnung aus Schraube und Mutter (5, 6) wirkt, mit Rückstellmitteln (15) zur Rückführung des angetriebenen Organs in eine Ruhe- oder Sicherheitsstellung, und mit einem Elektromagneten (10, 11) zum Festhalten des angetriebenen Organs (7) in Arbeitsstellung, wobei der Elektromagnet (10) auf ein bewegliches Organ (11) einwirkt und die Anordnung aus Schraube und Mutter (5, 6) mit dem beweglichen Organ (11) des Elektromagneten (10, 11) gekoppelt ist und zusammen mit dem genannten beweglichen Organ des Elektromagneten axial verschiebbar ist, dadurch gekennzeichnet, dass der Rotor (4) des Motors (3, 4) axial beweglich ist und die genannte Mutter vom genannten Rotor gebildet wird.

2. Antrieb nach Anspruch 1, dadurch gekennzeichnet, dass sich der Rotor (4) in Arbeitsstellung mindestens ungefähr in einer zum Stator (3) des Motors symmetrischen Stellung befindet, um einen Betrieb in beiden Drehrichtungen zu gestatten.

3. Antrieb nach einem der Ansprüche 1 und 2, mit einer Steuerschaltung zur automatischen Speisung des Motors (3, 4) beim Wiederanlegen des Stroms in Richtung der Verschiebung des beweglichen Organs (11) des Magneten (10, 11) in Arbeitsstellung mittels der Anordnung aus Schraube und Mutter (5, 6).

4. Antrieb nach Anspruch 1, dadurch gekennzeichnet, dass eine Mutter bezüglich des Rotors axial verschiebbar ist, jedoch von ihm angetrieben wird.

## Claims

1. Linear actuator, comprising an electric motor (3, 4) whose rotor (4) acts on a screw-and-nut system (5, 6) for displacing the actuated element (7), reset means (15) for returning the actuated element in a rest or safety position, and an electromagnet (10, 11) for retaining the actuated element (7) in working position, said electromagnet (10) acting on a movable element (11), the screw-and-nut system (5, 6) being coupled to the movable element (11) of the electromagnet (10, 11) and capable of being displaced axially together with said movable element of the electromagnet, characterised in that the rotor (4) of the motor (3, 4) is axially displaceable, said nut being constituted by said rotor.

2. Actuator according to claim 1, characterised in that the rotor (4) is located, in its working position, at least approximately in a symmetrical position with respect to the stator (3) of the motor for allowing an operation in both rotational directions.

3. Actuator according to one of claims 1 and 2, comprising a control circuit capable of automatically powering the motor (3, 4) on restoring the current in the direction of displacing the movable element (11) of the magnet (10, 11) into working position by means of the screw-and-nut system (5, 6).

4. Actuator according to claim 1, characterised in that a nut is axially displaceable with respect to the rotor but actuated by the latter.
